# EUROPEAN PATENT APPLICATION

(11) **EP 3 805 742 A1**
(43) Date of publication of application: **14.04.2021**
(21) Application number: 19815803.2
(22) Date of filing: 15.03.2019
(51) Int. Cl.: G01N 23/18, G01N 23/04

(54) **INSPECTION DEVICE**

(30) Priority: 08.06.2018 JP 2018110177
(71) Applicant: ISHIDA CO., Ltd., Kyoto-shi, Kyoto 606-8392 (JP)
(72) Inventor: YURUGI Futoshi, Ritto-shi, Shiga 520-3026 (JP); SUGIMOTO Kazuyuki, Ritto-shi, Shiga 520-3026 (JP)
(74) Representative: Global IP Europe Patentanwaltskanzlei
(86) International application number: PCT/JP2019/010959
(87) International publication number: WO 2019/235022

(57) **Abstract**

An X-ray inspection device 1 includes an X-ray irradiation unit 6, an X-ray detection unit 7 that detects X-rays, and a control unit 10 that uses a plurality of algorithms to determine whether or not an article contains a foreign substance based on an image created from an X-ray detection result. The control unit 10 uses a first algorithm among the plurality of algorithms to perform first processing on the image, thereby determining whether or not the article contains the foreign substance, uses a second algorithm among the plurality of algorithms to perform second processing on the image, thereby determining whether or not the article contains the foreign substance, and determines that the article contains the foreign substance when the article contains the foreign substance common to determination results of the first processing and the second processing.

## Description

### Technical Field

The present invention relates to an inspection device.

### Background Art

As a conventional inspection device, for example, a device described in Patent Literature 1 has been known. The inspection device described in Patent Literature 1 includes an X-ray irradiation unit that irradiates an article with X-rays and an X-ray detection unit that detects X-rays, and an X-ray image created based on an X-ray detection result is subjected to image processing to inspect the article.

### Citation List

### Patent Literature

Patent Literature 1: International Publication WO 2006/0011 07

### Summary of Invention

### Technical Problem

In an inspection device, improvement of detection accuracy is required. In the inspection device, when the detection accuracy is increased, a determination condition for detecting a foreign substance contained in an article is set to be strict (a determination threshold value is changed). However, when the determination condition is set to be strict, a substance other than the foreign substance may be erroneously detected as the foreign substance. As a result, a yield may decrease.

An object of an aspect of the invention is to provide an inspection device capable of suppressing occurrence of erroneous detection while improving detection accuracy.

### Solution to Problem

An inspection device according to an aspect of the invention includes an irradiation unit configured to irradiate an article with electromagnetic waves, a detection unit configured to detect the electromagnetic waves, and a processing unit configured to use a plurality of algorithms to determine whether or not the article contains a foreign substance based on an image created from a detection result of the detection unit, and the processing unit is configured to use a first algorithm among the plurality of algorithms to perform first processing on the image, thereby determine whether or not the article contains the foreign substance, use a second algorithm among the plurality of algorithms to perform second processing on the image, thereby determine whether or not the article contains the foreign substance, and determine that the article contains the foreign substance when the article contains the foreign substance common to determination results of the first processing and the second processing.

In the inspection device according to the aspect of the invention, the processing unit determines that the article contains the foreign substance when the article contains the foreign substance common to determination results of the first processing and the second processing. As described above, in the inspection device, the presence or absence of the foreign substance is finally determined using results determined by two different algorithms, for example, using a determination result of determining that the foreign substance is contained in the first processing and a determination result of determining that the foreign substance is not contained in the second processing. In this way, in the inspection device, even in a case where it is determined that the foreign substance is contained in the first processing as a result of a strict determination condition, when it is determined that the foreign substance is not contained in the second processing, it is not determined that the article contains the foreign substance. Therefore, in the inspection device, even when the determination condition is strict, it is possible to suppress occurrence of erroneous detection of the foreign substance. As a result, in the inspection device, it is possible to suppress occurrence of erroneous detection while improving detection accuracy.

In an embodiment, the processing unit may determine the foreign substance based on a first threshold value in the first processing, and determine the foreign substance based on a second threshold value different from the first threshold value. In this configuration, the foreign substance is determined based on two different threshold values. For this reason, in the inspection device, it is possible to further suppress occurrence of erroneous detection while improving detection accuracy.

In an embodiment, the detection unit may detect electromagnetic waves in a first energy band passing through the article and electromagnetic waves in a second energy band passing through the article, and the processing unit may determine whether or not the article contains a foreign substance based on the image created from a first detection result of the electromagnetic waves in the first energy band and a second detection result of the electromagnetic waves in the second energy band in at least one of the first processing and the second processing. In this configuration, since the image created from the detection results of the two different energy bands is used, it is possible to more accurately detect the foreign substance.

### Advantageous Effects of Invention

According to an aspect of the invention, it is possible to suppress occurrence of erroneous detection while improving detection accuracy.

### Brief Description of Drawings

FIG. 1 is a configuration diagram of an X-ray inspection device according to an embodiment.
FIG. 2 is a configuration diagram of an inside of a shield box illustrated in FIG. 1.
FIGS. 3(a) and 3(b) are diagrams illustrating transmission images.
FIG. 4 is a flowchart illustrating an operation of a control unit.
FIGS. 5(a), 5(b), and 5(c) are diagrams illustrating images after image processing.
FIG. 6 is a diagram illustrating an example of foreign substance determination.
FIG. 7 is a diagram illustrating an example of foreign substance determination.
FIG. 8 is a diagram illustrating a determination result.

### Description of Embodiments

Hereinafter, a preferred embodiment of the invention will be described in detail with reference to the accompanying drawings. Note that in the description of the drawings, the same or equivalent elements are designated by the same reference symbols, and duplicate description will be omitted.

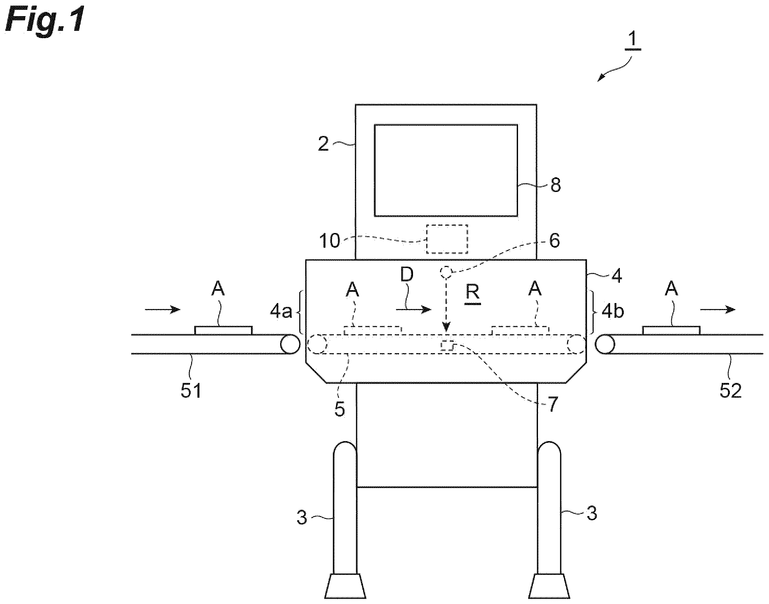

As illustrated in FIG. 1, an X-ray inspection device (inspection device) 1 includes a device main body 2, support legs 3, a shield box 4, a conveyance unit 5, an X-ray irradiation unit (irradiation unit) 6, an X-ray detection unit (detection unit) 7, a display operation unit 8, and a control unit (processing unit) 10.

The X-ray inspection device 1 generates an X-ray transmission image of an article A while conveying the article A, and inspects the article A (for example, storage number inspection, foreign substance contamination inspection, missing item inspection, crack chip inspection, etc.) based on the X-ray transmission image. The article A before inspection is carried into the X-ray inspection device 1 by a carry-in conveyor 51. The article A after the inspection is carried out from the X-ray inspection device 1 by a carry-out conveyor 52. The article A determined to be a defective product by the X-ray inspection device 1 is sorted out of a production line by a sorting device (not illustrated) arranged downstream of the carry-out conveyor 52. The article A determined to be a non-defective product by the X-ray inspection device 1 passes through the sorting device without change.

The device main body 2 houses the control unit 10, etc. The support legs 3 support the device main body 2. The shield box 4 is provided to the device main body 2. The shield box 4 prevents X-rays from leaking to the outside. An inspection region R in which inspection of the article A by X-rays is performed is provided inside the shield box 4. A carry-in inlet 4a and a carry-out outlet 4b are formed in the shield box 4. The article A before inspection is carried into the inspection region R from the carry-in conveyor 51 via the carry-in inlet 4a. The article A after inspection is carried out from the inspection region R to the carry-out conveyor 52 via the carry-out outlet 4b. Each of the carry-in inlet 4a and the carry-out outlet 4b is provided with an X-ray shielding curtain (not illustrated) for preventing X-ray leakage.

The conveyance unit 5 is arranged inside the shield box 4. The conveyance unit 5 conveys the article A along a conveyance direction D from the carry-in inlet 4a to the carry-out outlet 4b via the inspection region R. The conveyance unit 5 is, for example, a belt conveyor hung between the carry-in inlet 4a and the carry-out outlet 4b.

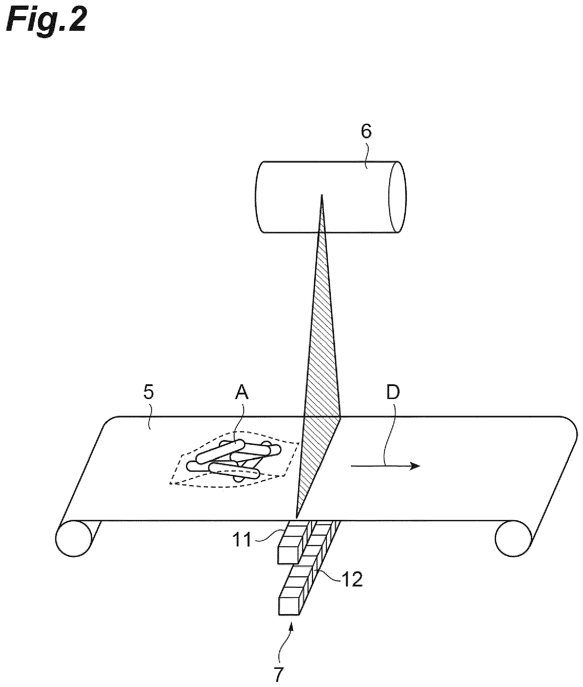

As illustrated in FIGS. 1 and 2, the X-ray irradiation unit 6 is arranged in the shield box 4. The X-ray irradiation unit 6 irradiates the article A conveyed by the conveyance unit 5 with X-rays (electromagnetic waves). The X-ray irradiation unit 6 has, for example, an X-ray tube that emits X-rays and a collimator that spreads the X-rays emitted from the X-ray tube in a fan shape in a plane perpendicular to the conveyance direction D.

The X-ray detection unit 7 is arranged inside the shield box 4. The X-ray detection unit 7 has a first line sensor 11 and a second line sensor 12. Each of the first line sensor 11 and the second line sensor 12 includes an X-ray detection element arranged one-dimensionally along a horizontal direction perpendicular to the conveyance direction D. The first line sensor 11 detects X-rays in a low energy band (first energy band) passing through the article A and a conveyance belt of the conveyance unit 5. The second line sensor 12 detects X-rays in a high energy band (second energy band) passing through the article A, the conveyance belt of the conveyance unit 5, and the first line sensor 11.

As illustrated in FIG. 1, the display operation unit 8 is provided on the device main body 2. The display operation unit 8 displays various types of information and receives input of various conditions. The display operation unit 8 is, for example, a liquid crystal display and displays an operation screen as a touch panel. In this case, an operator can input various conditions via the display operation unit 8.

The control unit 10 is arranged inside the device main body 2. The control unit 10 controls an operation of each unit of the X-ray inspection device 1. The control unit 10 includes a CPU (Central Processing Unit), a ROM (Read Only Memory), a RAM (Random Access Memory), etc. To the control unit 10, a detection result (first detection result) of X-rays in the low energy band is input from the first line sensor 11 (see FIG. 2) of the X-ray detection unit 7, and a detection result (second detection result) of X-rays in the high energy band is input from the second line sensor 12 (see FIG. 2) of the X-ray detection unit 7. The control unit 10 functions as a processing unit that determines whether or not the article A contains a foreign substance using a plurality of image processing algorithms based on images created from the X-ray detection results.

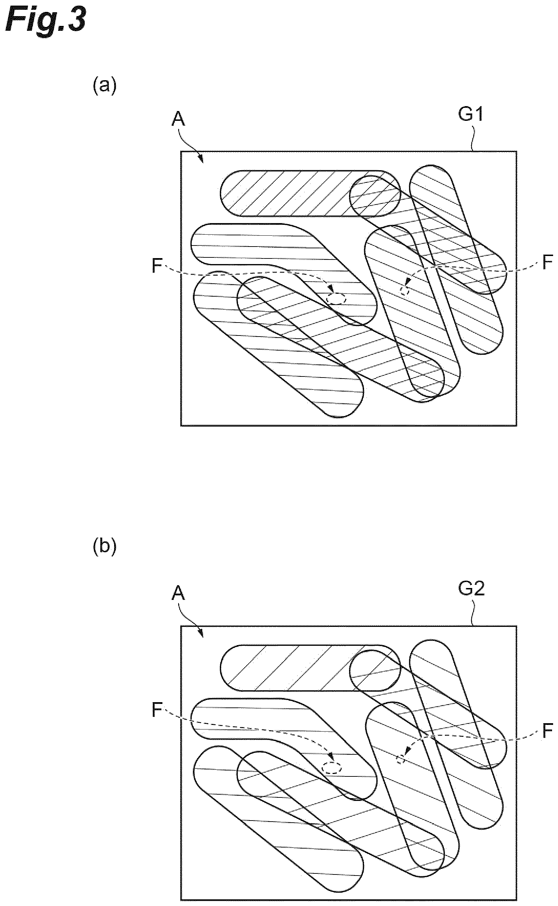

The control unit 10 generates transmission images based on the detection results of the first line sensor 11 and the second line sensor 12. As illustrated in FIG. 3(a), the control unit 10 generates a transmission image G1 based on the detection result of the low energy band X-rays of the first line sensor 11. The transmission image G1 has a relatively high contrast and is dark as a whole. As illustrated in FIG. 3(b), the control unit 10 generates a transmission image G2 based on the detection result of the high energy band X-rays of the second line sensor 12. The transmission image G2 has a relatively low contrast and is bright as a whole. Note that in FIGS. 3(a) and 3(b), a substance that can be determined as a foreign substance F is indicated by the foreign substance F.

The control unit 10 uses a plurality of image processing algorithms to perform processing (image processing) on the transmission images G1 and G2, thereby generating processed images. The image processing algorithm is a type indicating a processing procedure of image processing applied to the transmission images G1 and G2. The image processing algorithm includes one image processing filter or a combination of a plurality of image processing filters. The plurality of image processing algorithms can be acquired from the outside via a network such as the Internet. In addition, the plurality of image processing algorithms can be acquired from an external storage medium such as a USB memory or a removable hard disk. At least one or more of the plurality of image processing algorithms can be automatically generated from a plurality of image processing filters based on a specification, an inspection condition, etc. of the X-ray inspection device 1 by adopting a genetic algorithm (GA), which is a method that applies a mechanism of heredity and evolution in a biological world. At least some of the plurality of image processing algorithms can be appropriately set by the operator via the display operation unit 8.

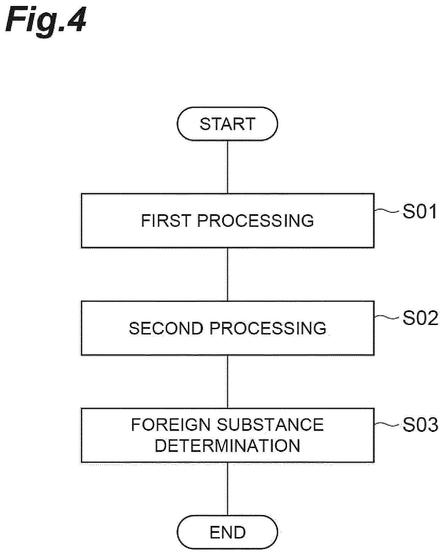

The control unit 10 uses two image processing algorithms to determine whether or not the article A contains the foreign substance F. Specifically, as illustrated in FIG. 4, the control unit 10 uses a first image processing algorithm (first algorithm) among the plurality of image processing algorithms to perform first processing on the transmission image G1 and the transmission image G2, thereby determining whether or not the article A contains the foreign substance F (first processing: step S01). Specifically, for example, when sensitivity levels are set to "1 to 7" in the plurality of image processing algorithms, the control unit 10 applies an image processing algorithm having a sensitivity level of "4" as the first image processing algorithm.

The control unit 10 uses a second image processing algorithm (second algorithm) among the plurality of image processing algorithms to perform second processing on the transmission image G2 (transmission image G1), thereby determining whether or not the article A contains the foreign substance F (second processing: step S02). Specifically, in the present embodiment, the control unit 10 applies an algorithm generated by adopting a genetic algorithm as the second image processing algorithm. When the article A contains the foreign substance F common to the determination results of the first processing and the second processing, the control unit 10 determines that the article A contains the foreign substance F (foreign substance determination: Step S03).

### [First processing]

First, a description will be given of a processing procedure of the first processing by the first image processing algorithm. The first image processing algorithm is selected, for example, by an operator, depending on the article A. In the first processing, it is determined whether or not the article A contains the foreign substance F using two images of the transmission image G1 and the transmission image G2.

The control unit 10 performs a process of comparing sizes, brightness, positions, etc. of the transmission image G1 and the transmission image G2, and divides a brightness value of the transmission image G1 subjected to the process and a brightness value of the transmission image G2 subjected to the process by each pixel, thereby performing a process of extracting a difference between the transmission image G1 and the transmission image G2.

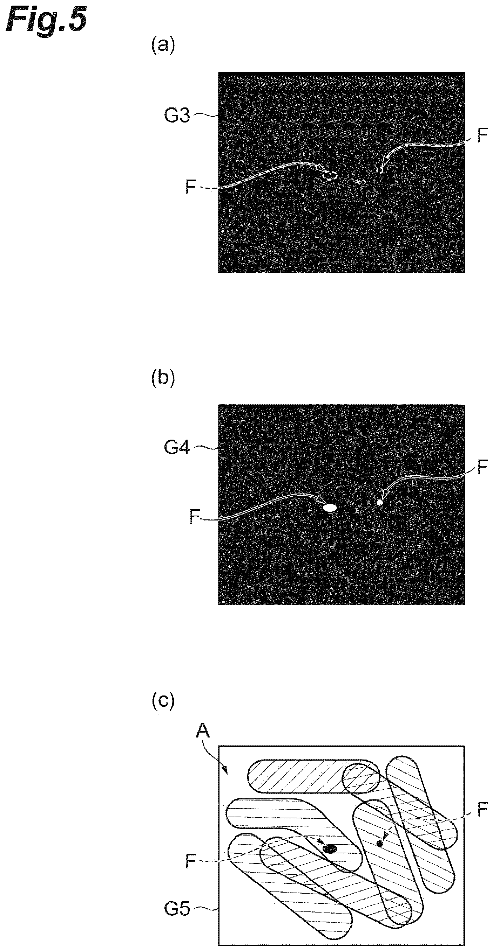

The control unit 10 generates a processed image G3 (see FIG. 5(a)) from which noise is removed, binarizes a certain value as a threshold value, and generates a binarized image G4 (see FIG. 5(b)) from which only the foreign substance F is extracted (binarization). The control unit 10 superimposes the binarized image G4 and the transmission image G2 to generate a determination image G5 (see FIG. 5(c)).

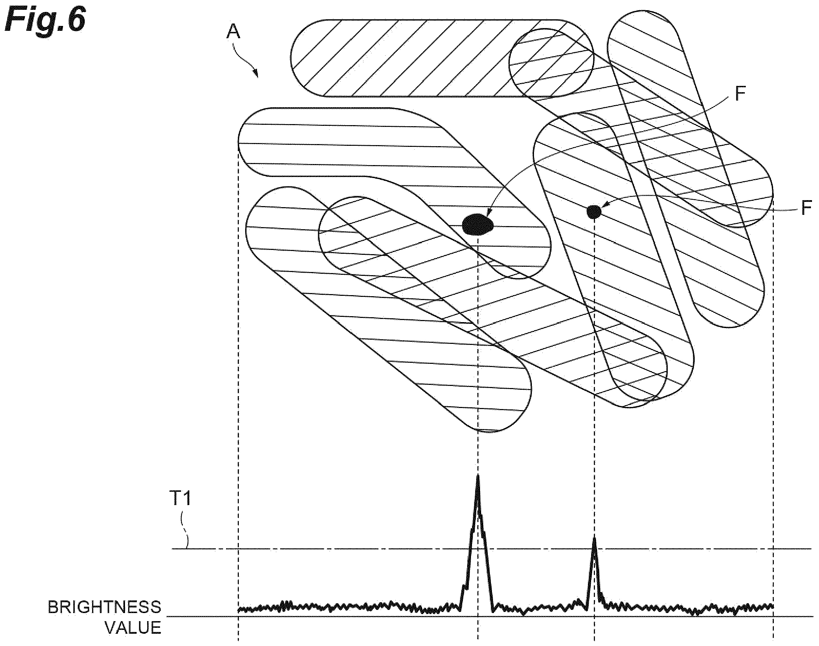

The control unit 10 determines whether or not the article A contains the foreign substance F based on the determination image G5 generated by the first image processing algorithm. As illustrated in FIG. 6, when a brightness value exceeds a first threshold value T1 in the determination image G5, the control unit 10 determines that the article A contains the foreign substance F. In the present embodiment, the control unit 10 determines in the first processing that the article A contains two foreign substances F. The control unit 10 stores a first determination result by the first processing in a storage unit. Note that the first threshold value T1 is appropriately set by a test, etc. according to a property of the article A. Specifically, the first threshold value T1 can be set using a sample in which a foreign substance is mixed.

### [Second processing]

Next, a description will be given of a processing procedure of the second processing by the second image processing algorithm. The second image processing algorithm is selected, for example, by the operator, depending on the article A. In the second processing, the transmission image G2 is used to determine whether or not the article A contains the foreign substance F.

The control unit 10 performs predetermined image processing on the transmission image G2 based on the second image processing algorithm, and determines whether or not the article A contains the foreign substance F based on a determination image obtained by the image processing. The predetermined image processing is, for example, binarization processing, etc. of the transmission image G2.

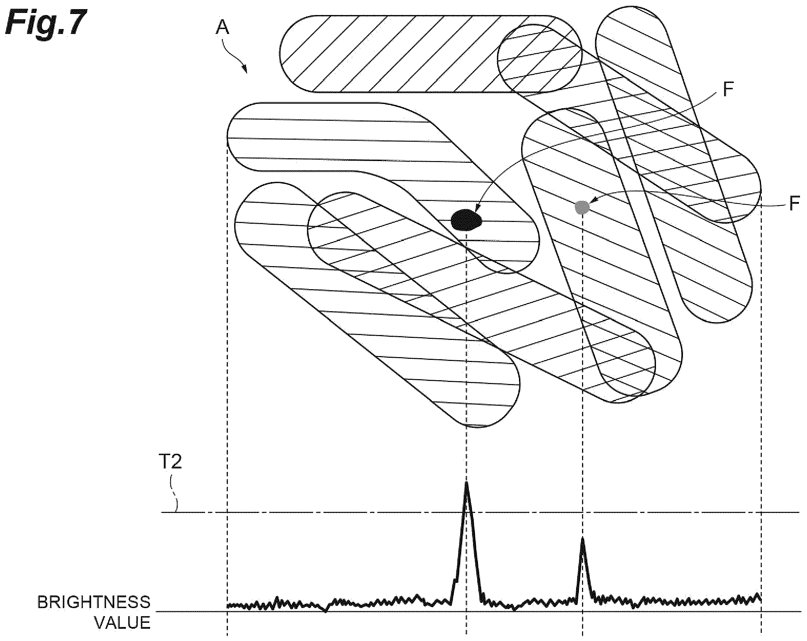

The control unit 10 determines whether or not the article A contains the foreign substance F based on the determination image generated by the second image processing algorithm. As illustrated in FIG. 7, when a brightness value exceeds a second threshold value T2 in the determination image, the control unit 10 determines that the article A contains the foreign substance F. The second threshold value T2 is set to a value different from the first threshold value T1. In the present embodiment, the control unit 10 determines in the second processing that the article A contains one foreign substance F. The control unit 10 stores the second determination result by the second processing in the storage unit. Note that the second threshold value is appropriately set by a test, etc. according to the property of the article A.

### [Foreign substance determination]

When the article A contains the foreign substance F common to the determination result of the first processing and the determination result of the second processing, the control unit 10 determines that the article A contains the foreign substance F. The control unit 10 determines the presence or absence of the foreign substance F based on the first determination result and the second determination result. In the present embodiment, it is detected that two foreign substances F are mixed in the determination result of the first processing, and it is detected that one foreign substance F is mixed in the determination result of the second processing. When the foreign substance F common to the determination results of the first processing and the second processing is present, the control unit 10 determines that the article A contains the foreign substance F.

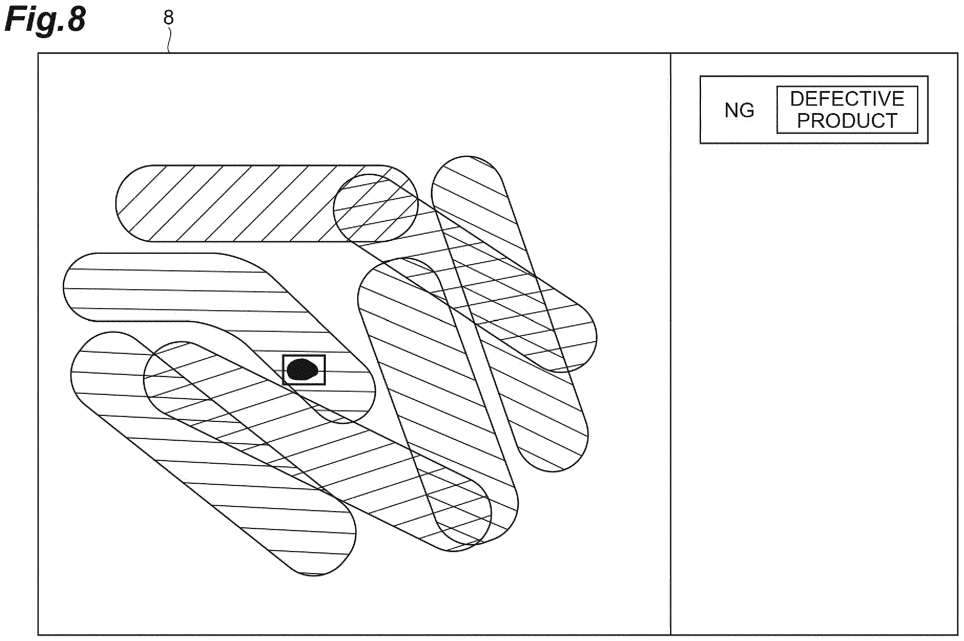

After determination of foreign substance detection, the control unit 10 causes the display operation unit 8 to display the determination result. As shown in FIG. 8, a determination result image and a determination result "OK (non-defective product)" or "NG (defective product)" are displayed on the display operation unit 8. In the display operation unit 8, a region including the foreign substance F is enclosed and displayed. In addition, when the control unit 10 determines that the article A contains the foreign substance F, the control unit 10 outputs an instruction signal instructing the sorting device to sort the article A.

As described above, in the X-ray inspection device 1 according to the present embodiment, when the article A contains the foreign substance F common to the determination results of the first processing and the second processing, the control unit 10 determines that the article A contains the foreign substance F. As described above, in the X-ray inspection device 1, the presence or absence of the foreign substance F is finally determined using results determined by two different image processing algorithms, for example, using a determination result of determining that the foreign substance F is contained in the first processing and a determination result of determining that the foreign substance F is not contained in the second processing. In this way, in the X-ray inspection device 1, even in a case where it is determined that the foreign substance F is contained in the first processing as a result of a strict determination condition, when it is determined that the foreign substance F is not contained in the second processing, it is not determined that the article A contains the foreign substance F. Therefore, in the X-ray inspection device 1, even when the determination condition is strict, it is possible to suppress occurrence of erroneous detection of the foreign substance F. As a result, in the X-ray inspection device 1, it is possible to suppress occurrence of erroneous detection while improving detection accuracy. In this way, in the X-ray inspection device 1, it is possible to avoid a decrease in yield.

In the X-ray inspection device 1 according to the present embodiment, the control unit 10 determines the foreign substance F based on the first threshold value T1 in the first processing, and determines the foreign substance F based on the second threshold value T2 different from the first threshold value T1 in the second processing. In this configuration, the foreign substance F is determined based on two different threshold values. For this reason, in the X-ray inspection device 1, it is possible to further suppress the occurrence of erroneous detection while improving the detection accuracy.

In the X-ray inspection device 1 according to the present embodiment, the X-ray detection unit 7 detects the X-rays in the first energy band passing through the article A and the X-rays in the second energy band passing through the article A. The control unit 10 determines whether or not the article A contains the foreign substance F based on the transmission image G1 and the transmission image G2 created from the first detection result of the X-rays in the first energy band and the second detection result of the X-rays in the second energy band in the first processing. In this configuration, since the transmission image G1 and the transmission image G2 created from the detection results of the two different energy bands are used, the foreign substance F can be more accurately detected.

In the X-ray inspection device 1 according to the present embodiment, the control unit 10 performs the first processing by the first image processing algorithm using the two transmission images of the transmission image G1 and the transmission image G2, and performs the second processing by the second image processing algorithm generated by adopting a genetic algorithm using one transmission image G2. As described above, since two image processing algorithms having different properties are used in the X-ray inspection device 1, it is possible to obtain different determination results in the first processing and the second processing. Therefore, in the X-ray inspection device 1, it is possible to further suppress the occurrence of erroneous detection while improving the detection accuracy.

Even though the embodiment of the invention has been described above, the invention is not necessarily limited to the above-described embodiment, and various modifications can be made without departing from a gist thereof.

In the embodiment, a mode in which the X-ray detection unit 7 has the first line sensor 11 and the second line sensor 12 has been described as an example. However, the X-ray detection unit may have at least one line sensor. In this case, the control unit 10 determines the foreign substance F using two different image processing algorithms based on one transmission image.

In the embodiment, a mode in which image acquisition, image alignment, contrast matching, two image calculation, noise removal, and binarization are performed as the first processing performed by the control unit 10 has been described as an example. However, processing content of the first processing is not limited thereto. Other processing methods may be used for determining the foreign substance using the two transmission images.

In the embodiment, a mode in which it is determined whether or not the article A contains the foreign substance F based on a determination image obtained by image processing by binarization as the second processing performed by the control unit 10 has been described as an example. However, the control unit 10 may perform image processing by a method other than binarization (for example, a trace detection method) in the second processing.

In the embodiment, a mode in which the control unit 10 executes the first processing using the first image processing algorithm, and executes the second processing using the second image processing algorithm has been described as an example. However, the control unit 10 may further perform third processing by further using a third algorithm different from the first image processing algorithm and the second image processing algorithm. In this case, it is determined whether or not the article A contains the foreign substance F based on determination results of the first processing, the second processing, and the third processing.

In the embodiment, a mode in which the control unit 10 determines the foreign substance F using the transmission image G2 in the second processing has been described as an example. However, the control unit 10 may use the transmission image G1 or both the transmission image G1 and the transmission image G2 in the second processing. The control unit 10 determines whether or not the article A contains the foreign substance F based on the transmission image G1 and the transmission image G2 created from the first detection result of the X-rays in the first energy band and the second detection result of the X-rays in the second energy band in at least one of the first processing and the second processing.

In the embodiment, a mode in which when there is the foreign substance F common to the first determination result and the second determination result, the control unit 10 determines that the article A contains the foreign substance F has been described as an example. However, the control unit 10 may further generate a determination image based on the determination image generated by the first processing and the determination image generated by the second processing, and apply a third threshold value to the determination image, thereby determining whether or not the article A contains the foreign substance F.

In the embodiment, a mode in which the X-ray inspection device 1 includes the conveyance unit 5 has been described as an example. However, the X-ray inspection device may not include the conveyance unit.

In the embodiment, a mode in which the image processing algorithm includes one image processing filter or a combination of a plurality of image processing filters has been described as an example. However, the image processing algorithm may be a trained model (machine learning algorithm) generated by machine learning. The trained model may be generated by a learning unit included in the X-ray inspection device 1, or may be generated by a learning unit of another device and acquired by the X-ray inspection device 1. The learning unit performs machine learning based on teacher data including a transmission image containing the foreign substance F, a transmission image not containing the foreign substance F, etc., acquires a feature amount related to the foreign substance F of the article A, and generates a trained model.

The trained model includes, for example, a neural network. The neural network inputs a pixel value of each pixel of a transmission image and outputs a certainty factor. The certainty factor is a value in a range of 0 to 1. The certainty factor indicates that the smaller the value, the lower the possibility of containing the foreign substance F, and the larger the value, the higher the possibility of containing the foreign substance F.

The control unit 10 uses the trained model as an image processing algorithm in at least one of the first processing and the second processing. It is preferable that the control unit 10 uses an image processing algorithm which is a trained model for one of the first processing and the second processing, and uses an image processing algorithm including a filter for the other one of the first processing and the second processing. As described above, the detection accuracy can be improved by using two image processing algorithms having different characteristics (configurations). For example, in the case of using a trained model as the first image processing algorithm and using a genetic algorithm as the second image processing algorithm, the control unit 10 determines whether or not the article A contains the foreign substance F based on a determination result of the first processing by the first image processing algorithm and a determination result of the second processing by the second image processing algorithm (based on a majority decision of a determination result). When the article A contains the foreign substance F common to the determination result of the first processing and the determination result of the second processing, the control unit 10 determines that the article A contains the foreign substance F.

As described above, the X-ray inspection device 1 can detect the foreign substance F, which is difficult to detect by the image processing algorithm including the filter, by using the trained model by machine learning as the image processing algorithm. For this reason, the X-ray inspection device 1 can suppress the occurrence of erroneous detection while improving the detection accuracy.

In the embodiment, a mode in which the inspection device is the X-ray inspection device 1 has been described as an example. However, the inspection device is not limited to the X-ray inspection device, and any inspection device that inspects an article using electromagnetic waves may be used. That is, in the invention, the electromagnetic waves are X-rays, near infrared rays, light, or other electromagnetic waves. In addition, the invention is not limited to inspecting the presence or absence of a foreign substance contained in an article, and may be used in an article shipped by housing content of food, etc. in a package such as a film packaging material to inspect biting of the content into a sealing portion of the package, damage to the content inside the package, mixing of a foreign substance in the package, etc. In addition, the type of article is not particularly limited, and various articles can be inspected. Similarly, the type of foreign substance is not particularly limited, and various foreign substances can be inspected.

### Reference Signs List

1: X-ray inspection device (inspection device), 6: X-ray irradiation unit (irradiation unit), 7: X-ray detection unit (detection unit), 10: control unit (processing unit), 11: first line sensor, 12: second line sensor, A: article, F: foreign substance.

## Claims

1. An inspection device comprising:
an irradiation unit configured to irradiate an article with electromagnetic waves;
a detection unit configured to detect the electromagnetic waves; and
a processing unit configured to use a plurality of algorithms to determine whether or not the article contains a foreign substance based on an image created from a detection result of the detection unit,
wherein the processing unit is configured to
use a first algorithm among the plurality of algorithms to perform first processing on the image, thereby determine whether or not the article contains the foreign substance,
use a second algorithm among the plurality of algorithms to perform second processing on the image, thereby determine whether or not the article contains the foreign substance, and
determine that the article contains the foreign substance when the article contains the foreign substance common to determination results of the first processing and the second processing.

2. The inspection device according to claim 1, wherein the processing unit is configured to determine the foreign substance based on a first threshold value in the first processing, and determine the foreign substance based on a second threshold value different from the first threshold value.

3. The inspection device according to claim 1 or 2,
wherein the detection unit is configured to detect electromagnetic waves in a first energy band passing through the article and electromagnetic waves in a second energy band passing through the article, and
the processing unit is configured to determine whether or not the article contains a foreign substance based on the image created from a first detection result of the electromagnetic waves in the first energy band and a second detection result of the electromagnetic waves in the second energy band in at least one of the first processing and the second processing.
